# EUROPÄISCHE PATENTSCHRIFT

(11) **EP 4 155 098 B1**
(45) Veröffentlichungstag und Bekanntmachung des Hinweises auf die Patenterteilung: **26.02.2025**
(21) Anmeldenummer: 22195079.3
(22) Anmeldetag: 12.09.2022
(51) Int. Cl.: B60C 23/04, G07C 5/00

(54) **REIFENDRUCKMESSSYSTEM UND VERFAHREN ZUM BETREIBEN DESSELBEN**
TYRE PRESSURE MEASURING SYSTEM AND METHOD FOR OPERATING THE SAME
SYSTÈME DE MESURE DE PRESSION DE PNEU ET SON PROCÉDÉ DE FONCTIONNEMENT

(30) Priorität: 22.09.2021 DE 102021124521
(43) Veröffentlichungstag der Anmeldung: 29.03.2023
(73) Patentinhaber: ZF CV Systems Global GmbH, 3006 Bern (CH)
(72) Erfinder: KAMINSKI, Jan Leon, 30539 Bemerode (DE); RODENBERG, Alexander, 38102 Braunschweig (DE); WITTE, Norbert, 31867 Lauenau (DE)
(74) Vertreter: Ohlendorf, Henrike

(56) Entgegenhaltungen:
- WO-A1-2005/113261
- WO-A1-2017/179968
- DE-A1- 102016 225 982

## Beschreibung

Die Erfindung betrifft ein Reifendruckmesssystem für Fahrzeuge, wie Personenfahrzeuge, Nutzfahrzeuge, Zugmaschinen, Sattelauflieger und/oder Anhängerfahrzeuge, wobei jedes Rad eines Fahrzeugs einen Reifendrucksensor, einen Sender sowie eine Batterie aufweist, und wobei das Fahrzeug mit einem elektronischen, funktechnischen Empfängermodul ausgestattet ist, welches zum drahtlosen Empfang von mittels der Reifendrucksensoren gemessenen Reifendruckmesswerten ausgebildet ist.

Außerdem betrifft die Erfindung ein Verfahren zur Ermittlung der Reifendrücke der Räder von mindestens zwei in räumlicher Nähe zueinander angeordneten Fahrzeugen, wie Personenfahrzeuge, Nutzfahrzeuge, Zugmaschinen, Sattelauflieger und/oder Anhängerfahrzeuge, wobei jedes Rad eines Fahrzeugs einen Reifendrucksensor, einen Sender sowie eine Batterie aufweist, und wobei das Fahrzeug mit einem elektronischen, funktechnischen Empfängermodul ausgestattet ist, welches zum drahtlosen Empfang von mittels der Reifendrucksensoren gemessenen Reifendruckmesswerten ausgebildet ist.

Das erwähnte Empfängermodul kann ein gesondertes Gerät oder ein Bestanteil einer im Fahrzeug verbauten Telematik-Einheit sein. Das Empfängermodul kann beispielsweise auch die Signale eines Temperatursensors empfangen, welcher jeweils zusätzlich zu dem jeweiligen Drucksensor an jedem der Fahrzeugräder angeordnet ist.

Es ist bekannt, dass bereits vor Fahrtantritt und während längerer Stillstandzeiten die Information über den korrekten Reifendrucks eines Fahrzeugs für den Betreiber dieses Fahrzeugs von größerer Bedeutung ist. Mit Reifendruckmesssystemen gemäß dem Stand der Technik, bestehend aus einem Reifendrucksensor samt Sender und Batterie in jedem Fahrzeugrad und einem Empfängermodul im Fahrzeug, ist eine zuverlässige und vollständige Reifendrucküberwachung während des Stillstands des Fahrzeugs beziehungsweise bei einem geparkten Fahrzeug oft jedoch nicht möglich. Dies liegt daran, dass ein Rad des Fahrzeugs am Ende einer Fahrt umfangsbezogen so stehen geblieben sein kann, dass das Sensorsignal des Reifendrucksensors durch die Felge des Fahrzeugrades oder andere Fahrwerkskomponenten, wie das Achsrohr oder Rahmenbauteile, abgeschirmt und dadurch funktechnisch abgeschattet ist, sodass die Funksignale des betroffenen Reifendrucksensors von dem Empfängermodul des Fahrzeugs nicht empfangbar sind und für die Stillstandzeit des Fahrzeugs kein aktueller Reifendruck des betreffenden Rades messbar ist. In einem solchen Fall können die aktuellen Reifendrücke aller Räder erst wieder nach Fahrtantritt, also bei sich drehenden Rädern, ermittelt werden.

Zur Lösung dieses technischen Problems ist es naheliegend, mehrere Reifendrucksensoren samt Sender und Antenne an unterschiedlichen Umfangsstellen des Fahrzeugrades anzuordnen. Aus der DE 103 17 689 A1 ist es bekannt, mehrere Sender-Antennen an unterschiedlichen Umfangsstellen des Fahrzeugreifens zu positionieren. Aus der DE 10 2007 007 135 A1 ist es bekannt, für einen am jeweiligen Fahrzeugrad angeordneten Reifendrucksensor samt Sender in unmittelbarer Nähe zur Senderantenne einen stationär angeordneten Empfänger vorzusehen. Diese technischen Lösungen verursachen alle vergleichsweise hohe Herstellungskosten und sind daher nicht praxisgerecht.

Außerdem übermitteln bekannte Empfängermodule für den Empfang von Sensorsignalen von Reifendrucksensoren im eingeschalteten Zustand, zum Beispiel bei eingeschalteter Fahrzeug-Zündung beziehungsweise aktivierter Motoreinheit, die Reifendruckdaten mit einer deutlich größeren Häufigkeit von zum Beispiel einmal pro Minute in ein fahrzeugeigenes Informationssystem, wie zum Beispiel einen CAN-Bus, hingegen im ausgeschalteten Zustand beziehungsweise bei ausgeschalteter Fahrzeug-Zündung und deaktivierter Motoreinheit nur noch alle 12 Stunden einmal. Hierdurch wird der Stromverbrauch der Reifendrucksensoren sowie der Sendeelektronik reduziert und die Gebrauchsdauer der den Reifendrucksensoren zugeordneten Batterien verlängert. Insbesondere bei dem geschilderten langen Messintervall sind jedoch schleichende Druckverluste in den Rädern des Fahrzeugs vor dem Losfahren des Fahrzeugs unter Umständen nicht immer rechtzeitig erkennbar, sodass eine gegebenenfalls notwendige Anhebung des Reifendrucks noch auf dem Standplatz des Fahrzeugs und vor dessen Losfahren unterbleibt. Es besteht dann zumindest die Gefahr, dass das Fahrzeug mit einem zu hohen Kraftstoffverbrauch betrieben wird. Der Reifendruck kann zwar später auf einen korrekten Wert eingestellt werden, jedoch ist dies oft nur auf einem Rastplatz mit Zeitverlust oder nach Rückkehr auf dem Betriebshof des Fahrzeugbetreibers möglich. Im schlimmsten Fall kann der Betrieb eines Fahrzeugs mit einem deutlich zu geringen Reifendruck zu einem Totalausfall des Reifens führen.

WO 2017/179968 A1 offenbart ein Reifendrucküberwachungssystem, wobei ein Clustermodul einen Repeater aufweist, der kabellos mit einem zur Reifendruckmessung an einem Reifen angeordneten Sensor verbunden ist. Identifikationsdaten des Sensors werden dem Repeater mitgeteilt. Der Repeater empfängt Daten von dem Sensor und leitet diese weiter an das Clustermodul oder ein Haupt-Steuergerät. Das Haupt-Steuergerät kommuniziert mit einem Mobilgerät, einer Cloud und/oder einem Netzwerkserver.

WO 2005/113261 A1 offenbart ein System zum Verarbeiten von Reifeninformationen mit einem an oder in einem Reifen angeordneten Sensor, einer Ausleseeinheit und einer zentralen Datenbank. Der Sensor misst einen Reifendruck und übermittelt diesen an die Ausleseeinheit, von wo der Reifendruck an die zentrale Datenbank weiter übermittelt wird.

DE 10 2016 225 982 A1 offenbart ein System zum Diebstahlsschutz für Fahrzeuge, bei dem Fahrzeugräder identifizierende Fahrzeugradidentifikationsdaten über ein an einem Fahrzeug angeordnetes Steuergerät auf einem Datenbankserver hinterlegt werden.

Der Erfindung liegt daher die Aufgabe zugrunde, ein Reifendruckmesssystem für Fahrzeuge zu schaffen, welches eine möglichst zuverlässige und lückenlose Überwachung der Reifendrücke aller Räder des Fahrzeugs, insbesondere unabhängig von deren jeweiliger Umfangsstellung im Stillstand, erlaubt. Darüber hinaus soll ein Verfahren zum Betrieb eines derartigen Reifendruckmesssystems vorgestellt werden.

Die vorrichtungsbezogene Aufgabe ist durch ein Reifendruckmesssystem mit den Merkmalen des Anspruchs 1 gelöst, während die Lösung der das Verfahren betreffende Aufgabe durch die Merkmale eines unabhängigen Verfahrensanspruchs definiert ist. Vorteilhafte Weiterbildungen sind in jeweils zugeordneten abhängigen Ansprüchen genannt.

Die Erfindung betrifft daher zunächst ein Reifendruckmesssystem für Fahrzeuge, wie beispielsweise Personenfahrzeuge, Nutzfahrzeuge, Zugmaschinen, Sattelauflieger und/oder Anhängerfahrzeuge, wobei jedes Rad eines Fahrzeugs einen Reifendrucksensor, einen Sender sowie eine Batterie aufweist, und wobei das Fahrzeug mit einem elektronischen, funktechnischen Empfängermodul ausgestattet ist, welches zum drahtlosen Empfang von mittels der Reifendrucksensoren gemessenen Reifendruckmesswerten ausgebildet ist.

Zur Lösung der gestellten Aufgabe ist bei diesem Reifendruckmesssystem vorgesehen, dass bei wenigstens zwei nebeneinander, hintereinander oder übereinander angeordneten Fahrzeugen die Reifendruckmesswerte sämtlicher Räder der mindestens zwei Fahrzeuge mittels der diesen zugeordneten Empfängermodulen über Funk empfangbar sind, soweit die Anordnung der Fahrzeuge sowie deren Bauteile und die Empfangbarkeit der Reifendruckmesswerte dies ohne Funkabschattung ermöglicht. Es ist weiterhin vorgesehen, dass das Empfängermodul des jeweiligen Fahrzeugs zumindest zeitweise mittels einer bidirektionalen Funkverbindung mit einer fahrzeugexternen elektronischen Datenbank verbindbar ist. Es ist weiterhin vorgesehen, dass ein dem jeweiligen Fahrzeug zugeordneter Fahrzeugidentifizierungswert sowie die diesem Fahrzeug zugeordneten Reifendruckmesswerte der Räder und Identifizierungswerte der jeweiligen Reifendrucksensoren der mindestens zwei Fahrzeuge mittels der bidirektionalen Funkverbindung in die fahrzeugexterne Datenbank übertragbar sind. Schließlich ist vorgesehen, dass die Fahrzeugidentifizierungswerte, die Reifendruckmesswerte und die Identifizierungswerte der Reifendrucksensoren aus der fahrzeugexternen Datenbank zumindest von den Empfängermodulen mittels der jeweiligen bidirektionalen Funkverbindungen abfragbar und empfangbar sind.

Hierdurch lassen sich mit Hilfe des in jedem Fahrzeug vorhandenen Empfängermoduls neben den fahrzeugeigenen Reifendruckmesswerten auch die Reifendruckmesswerte von Reifendrucksensoren von in räumlicher Nähe angeordneten, insbesondere abgestellten oder parkenden, Fahrzeugen auslesen. Daher ist ein zum Beispiel aufgrund einer ungünstigen Umfangsstellung des zugeordneten Rades funktechnisch abgeschirmter oder abgeschatteter Reifendrucksensor eines Fahrzeugs, dessen Reifendruckmesswerte von dem direkt zugeordneten fahrzeugeigenen Empfängermodul nicht empfangbar sind, bei günstiger Anordnung der Fahrzeuge mit Hilfe der Empfängermodule benachbart abgestellter Fahrzeuge empfangbar und an die fahrzeugexterne Datenbank zur Vervollständigung der Reifendrücke aller Fahrzeuge mittels der bidirektionalen Funkübertragungen übermittelbar. Das Reifendruckmesssystem erlaubt grundsätzlich sowohl die Überwachung der Reifendrücke von ruhenden als auch in Bewegung befindlichen Fahrzeugen.

Gemäß einer technisch vorteilhaften Ausgestaltung ist vorgesehen, dass die fahrzeugexterne Datenbank mittels eines fahrzeugexternen Computers derartig betreibbar ist, dass in dieser Datenbank die Fahrzeugidentifizierungswerte aller Fahrzeuge, welche dieses Reifendruckmesssystem nutzen, sowie Identifizierungswerte der Reifendrucksensoren dieser Fahrzeuge und die ermittelten sowie zugeordneten Reifendruckmesswerte abspeicherbar sind.

Das Initialisieren der bevorzugt mittels eines fahrzeugexternen Computers oder Servers realisierten Datenbank kann zum Beispiel bei der erstmaligen Inbetriebnahme eines Fahrzeugs und/oder durch das Einlesen von Inbetriebnahmeprotokollen der Fahrzeuge erfolgen. Die Identifizierungswerte der Reifendrucksensoren erlauben eine eindeutige Zuordnung der Reifendrucksensoren, und damit der von diesen gemessenen sowie gesendeten Reifendruckmesswerte der individuellen Reifendrücke, zu den Rädern aller das Druckmesssystem nutzenden Fahrzeuge.

Gemäß einer anderen vorteilhaften Ausgestaltung des Reifendruckmesssystems ist vorgesehen, dass die bidirektionalen Funkverbindungen zwischen den fahrzeugseitigen Empfängermodulen und der Datenbank mittels Sender und Empfänger realisiert ist, welche mit den Merkmalen eines Funkübertragungsstandards arbeiten, wie beispielsweise Mobilfunk, WLAN oder dergleichen. Hierdurch ist eine kostengünstige Realisierung mit Standard-Computerbauteilen gewährleistet. Darüber hinaus gestattet die Nutzung des Mobilfunks einen räumlich praktisch unbegrenzten Einsatz des Reifendruckmesssystems.

Bevorzugt ist das Reifendruckmesssystem derartig ausgebildet, dass die Empfängermodule sowie die bidirektionalen Funkverbindungen auch bei nicht genutzten Fahrzeugen und bei inaktiver Zündung zumindest zeitweise aktivierbar sind. Infolgedessen ist auch bei für einen längeren Zeitraum auf einem Parkplatz abgestellten Fahrzeugen eine weitgehend kontinuierliche Überwachung der Reifendrücke möglich, ohne insbesondere eine fahrzeugeigene Batterie übermäßig zu belasten. Dieses Zeitintervall kann zur Überwachung schleichender Luftverluste in den Fahrzeugrädern beispielsweise zwischen einer Stunde und 48 Stunden betragen.

Eine andere vorteilhafte Weiterbildung des Reifendruckmesssystems ist dadurch gekennzeichnet, dass die bidirektionalen Funkverbindungen mittels einer jeweils in die Empfängermodule integrierten Sende- und Empfangseinheit realisiert sind. Hierdurch ist ein besonders platzsparender und kompakter Aufbau der Empfängermodule gegeben. Darüber hinaus können somit zumindest die Identifizierungswerte der Reifendrucksensoren, die Reifendruckmesswerte und Fahrzeugidentifizierungswerte aus der fahrzeugexternen Datenbank heruntergeladen oder entsprechende, in den Empfängermodulen der Fahrzeuge temporär zwischengespeicherte Werte zur externen Datenbank über Funk hochgeladen werden.

Bevorzugterweise sind die in der fahrzeugexternen Datenbank abgespeicherten Reifendruckmesswerte der Fahrzeuge zumindest einer fahrzeugexternen stationären Anzeigeeinheit zuführbar. Hierdurch ist für einen Nutzer des Reifendruckmesssystems ein Gesamtüberblick über die Reifendrücke aller das Reifendruckmesssystem verwendenden Fahrzeuge gegeben. Als fahrzeugexterne Anzeigeeinheit kann zum Beispiel ein großflächiger Bildschirm oder ein Monitor dienen, welcher in einem Büro einer Spedition aufgestellt ist.

Gemäß einer weiteren technisch vorteilhaften Ausführungsform des Reifendruckmesssystems ist vorgesehen, dass in dem Empfängermodul eines Fahrzeugs die direkt ermittelbaren Reifendruckmesswerte abspeicherbar sind, und dass nicht direkt ermittelbare Reifendruckmesswerte dieses Fahrzeugs mittels der bidirektionalen Funkverbindung von der fahrzeugexternen Datenbank abfragbar, empfangbar und im Empfängermodul des anfragenden Fahrzeugs abspeicherbar sind. Aufgrund der in den Empfängermodulen lokal abgespeicherten vollständigen Reifendruckmesswerte stehen diese dem Nutzer des Reifendruckmesssystems als Anfangswerte auch unmittelbar bei Fahrtantritt zur Verfügung. Daher kann vor dem Verlassen eines Standplatzes des Fahreugs gegebenenfalls noch eine Korrektur von nicht ordungsgemäßen Reifendrücken erfolgen.

Weiter wird es als vorteilhaft beurteilt, wenn vorgesehen ist, dass mittels des Empfängermoduls zumindest eines Fahrzeugs die Reifendruckmesswerte von in räumlicher Nähe dieses Empfängermoduls fahrzeugungebunden lagernden, Reifendrucksensoren aufweisenden Rädern ermittelbar sowie in die fahrzeugexterne Datenbank zur zentralen Auswertung hochladbar sind. Hierdurch lässt sich zum Beispiel ein benachbartes Lager für Fahrzeugräder, also für Reifen samt Felge, mittels des Reifendruckmesssystems hinsichtlich dessen aktuellen Bestandes und der jeweiligen Luftdrücke mit überwachen. Sofern es sich bei dem zu überwachenden Lager um ein Reifenlager handelt, sind die ermittelten Reifendrücke zwar unwichtig, weil diese dem Druck der umgebenden Atmosphäre entsprechen, jedoch signalisiert eine empfangener Identifizierungswert eines Reifendrucksensors, dass sich dieser Reifen noch im Lagerbestand befindet.

Schließlich kann vorgesehen sein, dass mittels der in der fahrzeugexternen Datenbank abgespeicherten Reifendruckmesswerte oder der Identifizierungswerte der Reifendrucksensoren sowie mit einem in einem Computer abgespeicherten Optimierungsalgorithmus eine optimierte Parkordnung der mindestens zwei Fahrzeuge bestimmbar und anzeigbar ist. Hierdurch kann zum Beispiel ein häufig im Einsatz befindliches Fahrzeug bevorzugt zwischen zwei seltener benutzten Fahrzeugen geparkt werden, um deren Reifenluftdruck mit zu überwachen. Darüber hinaus lässt sich die Entfernung zwischen den Reifendrucksensoren in den Rädern der beiden äußeren, dauerhaft geparkten Fahrzeuge und dem Empfängermodul des mittleren Fahrzeugs zur Erhöhung der empfangbaren Signalstärke der Reifendrucksensoren minimieren.

Die eingangs genannte verfahrensbezogene Aufgabe wird durch ein Verfahren mit den Merkmalen des unabhängigen Verfahrensanspruchs gelöst. Dieses Verfahren dient zur Ermittlung der Reifendrücke der Räder von mindestens zwei in räumlicher Nähe zueinander angeordneten Fahrzeugen, wie beispielsweise Personenfahrzeugen, Nutzfahrzeugen, Zugmaschinen, Sattelaufliegern und/oder Anhängerfahrzeugen, wobei jedes Rad eines Fahrzeugs einen Reifendrucksensor, einen Sender sowie eine Batterie aufweist, und wobei das Fahrzeug mit einem elektronischen, funktechnischen Empfängermodul ausgestattet ist, welches zum drahtlosen Empfang von mittels der Reifendrucksensoren gemessenen Reifendruckmesswerten ausgebildet ist.

Dieses Verfahren weist die folgenden Verfahrensschritte auf:
a) Messen der Reifendrücke sämtlicher Räder der mindestens zwei Fahrzeuge mittels der diesen Rädern zugeordneten Reifendrucksensoren,
b) drahtloses Versenden der Reifendruckmesswerte zusammen mit einem Identifizierungswert des jeweils zugeordneten Reifendrucksensors,
c) Empfangen dieser Reifendruckmesswerte und Identifizierungswerte mittels des jeweiligen Empfängermoduls, sofern dieses Empfängermodul von den zugeordneten Reifendrucksensoren ohne Funkabschattung erreichbar ist,
d) Senden sämtlicher von dem jeweiligen Empfängermodul erfassten Reifendruckmesswerte zusammen mit dem Identifizierungswert des jeweiligen Reifendrucksensors und einem das jeweilige Fahrzeug identifizierenden Fahrzeugidentifizierungswert an eine fahrzeugexterne Datenbank mit Hilfe einer jeweils zwischen den Empfängermodulen und dieser Datenbank herstellbaren bidirektionalen Funkverbindung,
e) Zuordnen der von den Empfängermodulen der mindestens zwei Fahrzeuge ermittelten Reifendruckmesswerte zu den Rädern der mindestens zwei Fahrzeuge und
f) Abrufen der die Reifendrücke der Räder eines ausgewählten Fahrzeugs repräsentierenden Reifendruckmesswerte aus der Datenbank durch einen Nutzer.

Mittels dieses Verfahrens ist demnach eine vollständige Überwachung der Reifendrücke aller Räder der Fahrzeuge möglich, welche das Reifendruckmesssystem nutzen. Dies ist erfindungsgemäß auch dann möglich, wenn aufgrund von ungünstigen Radstellungen in Umfangsrichtung, welche durch andere Fahrzeugkomponenten zu einer funktechnischen Abschattung des Sendesignals führen können, nicht jedes Empfängermodul alle Signale von ihm zugeordneten Reifendrucksensoren vollständig empfangen kann.

Eine bevorzugte Weiterbildung dieses Verfahrens sieht zusätzlich in einem weiteren Verfahrensschritt g) vor, dass nach dem Festsellen eines zu niedrigen Reifenluftdrucks automatisch einer benannten Person oder einem Betreiber einer Fahrzeugflotte eine Nachricht zugesandt wird, beispielsweise per E-Mail oder mittels eines sozialen, elektronischen Kommunikationsmediums, dass ein bestimmtes Rad an einem bestimmten Fahrzeug den gemessenen, zu niedrigen Reifenluftdruck aufweist. Hierdurch wird erreicht, dass die Information über einen zu niedrigen Reifenluftdruck aktiv an eine verantwortliche Person gesendet wird, ohne dass diese Person zuvor aktiv die aktuellen Reifendrücke ihrer Fahrzeuge angefragt hat.

Es ist vorgesehen, dass die in der fahrzeugexternen Datenbank abgespeicherten Reifendruckmesswerte automatisch und fahrzeugindividuell an die Empfängermodule der jeweiligen Fahrzeuge mit Hilfe der bidirektionalen Funkverbindungen zurückübertragen werden. Hierdurch sind automatisch immer alle das jeweilige Fahrzeug betreffenden Reifendruckmesswerte in diesem vorhanden und bei Bedarf anzeigbar. Durch die Zurückübertragung beziehungsweise das Herunterladen der jeweils fahrzeugrelevanten Reifendruckmesswerte aus der fahrzeugexternen Datenbank sind sämtliche Reifendruckmesswerte lokal in jedem Fahrzeug innerhalb des jeweiligen Empfängermoduls abgespeichert und stehen für den Nutzer zur sofortigen Information bei Fahrtantritt bereit. Die Reifendruckmesswerte können dazu an einer Anzeigeeinheit des Fahrzeugs angezeigt werden. Bei abgestellten Anhängefahrzeugen können die Reifendruckmesswerte an einem externen mobilen Bedienungsgerät dargestellt werden.

Weiter kann bei dem erfindungsgemäßen Verfahren vorgesehen sein, dass die in der fahrzeugexternen Datenbank abgespeicherten Reifendruckmesswerte an eine zentrale, stationäre Anzeigeeinheit mit Hilfe einer bidirektionalen Funkverbindung übertragen werden. Hierdurch ist eine zentrale, lokale Übersichtsanzeige der Reifendruckmesswerte der Räder aller Fahrzeuge realisierbar, beispielsweise in einem Speditionsbüro, einer Werkstatt oder dergleichen.

Zusätzlich zu dem jeweils aktuellen Reifendruckmesswert, dem aktuellen Temperaturmesswert, dem Identifizierungswert des jeweiligen Rades oder des Drucksensors und dem Fahrzeugidentifizierungswert wird von der Sensoreinheit vorzugsweise jeweils auch ein Statuswert mitversendet, welcher zumindest das aktuelle Datum und die aktuelle Uhrzeit beinhaltet.

Zum besseren Verständnis der Erfindung ist der Beschreibung eine Zeichnung beigefügt, welche ein Ausführungsbeispiel zeigt. In der Zeichnung zeigt im Einzelnen
Fig. 1 eine schematische Darstellung eines Reifendruckmesssystems mit drei Fahrzeugen in einer Draufsicht,
Fig. 2 einen vereinfachten Längsschnitt durch ein Rad gemäß Fig. 1,
Fig. 3 eine schematische Darstellung eines Empfängermoduls des Reifendruckmesssystems gemäß Fig. 1, und
Fig. 4 einen Ablaufplan eines Verfahrens zum Betrieb des Reifendruckmesssystems gemäß Fig. 1.

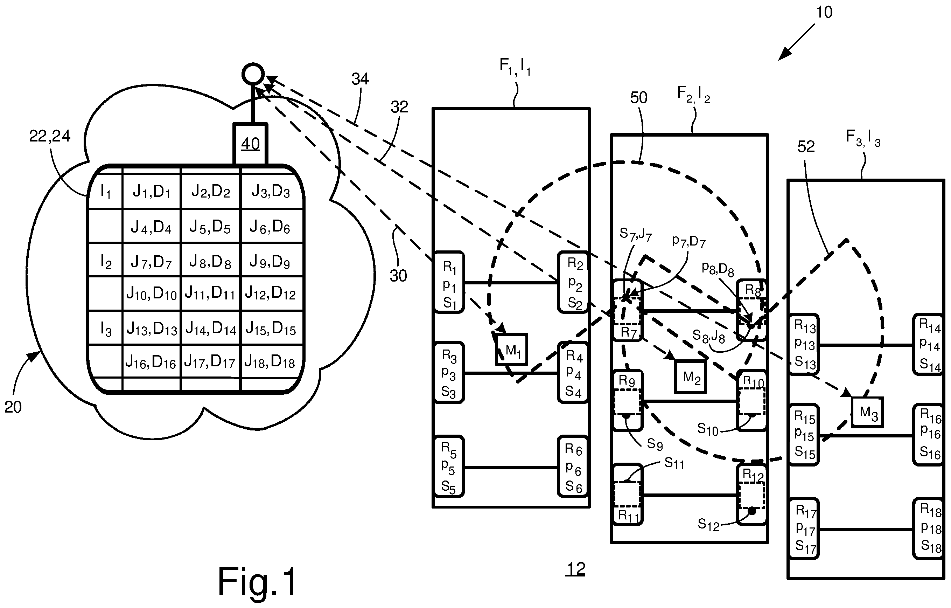

Das in Fig. 1 schematisch dargestellte Reifendruckmesssystems 10 umfasst lediglich beispielhaft drei Fahrzeuge F₁, F₂, F₃, welche auf einem Untergrund 12 stehend angeordnet oder abgestellt sind. Bei diesen Fahrzeugen F₁, F₂, F₃ kann es sich zum Beispiel um Personenfahrzeuge, Nutzfahrzeuge, Zugmaschinen, Sattelauflieger und/oder Anhängerfahrzeuge handeln. Die Fahrzeuge F₁, F₂, F₃, die hier lediglich exemplarisch als Sattelauflieger dargestellt sind, weisen eine angenähert rechteckförmige Umgangskontur auf. Die drei Fahrzeuge F₁, F₂, F₃ sind in einem geringen Abstand parallel zueinander platziert, jedoch in Längsrichtung jeweils geringfügig zueinander verschoben angeordnet. Das erste Fahrzeug F₁ verfügt über sechs Räder R₁, R₂, R₃, R₄, R₅, R₆ an drei, der besseren zeichnerischen Übersicht halber nicht bezeichneten Fahrzeugachsen, wobei jeweils zwei Räder endseitig an jeweils einer Achse drehbar angeordnet sind. Das zweite Fahrzeug F₂ weist ebenfalls sechs Räder R₇, R₈, R₉, R₁₀, R₁₁, R₁₂ auf, und das dritte Fahrzeug F₃ hat gleichfalls sechs Räder R₁₃, R₁₄, R₁₅, R₁₆, R₁₇, R₁₈, welche wiederum endseitig an hier nicht bezeichneten Fahrzeugachsen drehbar angeordnet sind.

Das erste Fahrzeug F₁ verfügt über ein erstes fahrzeugeigenes funktechnisches Empfängermodul M₁, das zweite Fahrzeug F₂ verfügt über ein zweites fahrzeugeigenes funktechnisches Empfängermodul M₂ und das dritte Fahrzeug F₃ verfügt über ein drittes fahrzeugeigenes funktechnisches Empfängermodul M₃.

Jedes Rad der insgesamt achtzehn Räder R₁ bis R₁₈ weist unter anderem eine angenähert topfförmige Felge auf, von denen hier der besseren Übersicht halber lediglich die Felgen der Räder R₇,...,R₁₂ des mittleren, zweiten Fahrzeugs F₂ mittels gestrichelter Linie gezeichnet angedeutet sind (ohne Bezugszeichen). Jedes der Räder R₁,...,R₁₈ der drei Fahrzeuge F₁, F₂, F₃ weist einen Reifendrucksensor S₁ bis S₁₈ im Bereich des jeweiligen Fahrzeugreifens oder der jeweiligen Felge auf. Dem am ersten Fahrzeug F₁ vorne links angeordneten ersten Rad R₁ ist hierbei der erste Reifendrucksensor S₁, dem zweiten Rad R₂ der zweite Reifendrucksensor S₂, dem dritten Rad R₃ der dritte Reifendrucksensor S₃ und so weiter zugeordnet. Jedem der hier lediglich exemplarisch insgesamt achtzehn Reifendrucksensoren S₁,...,S₁₈ ist darüber hinaus ein individueller Identifizierungswert J₁,..., J₁₈ zur eindeutigen Zuordenbarkeit zugewiesen, von denen im Bereich der drei Fahrzeuge F₁, F₂, F₃ lediglich die Identifizierungswerte J₇, J₈ der Reifendrucksensoren S₇, S₈ der beiden vorderen Räder R₇, R₈ des zweiten Fahrzeugs F₂ bezeichnet sind.

In den Rädern R₁,...,R₁₈ herrscht jeweils ein mittels der Reifendrucksensoren S₁,...,S₁₈ individuell zu messender und zu überwachender Reifendruck p₁ bis p₁₈, wobei in der Fig. 1 lediglich die Reifendrücke p₁ bis p₆, p₇, p₈ sowie p₁₃ bis pis in den Rädern R₁ bis R₆, R₇, R₈ sowie R₁₃ bis R₁₈ mit Bezugszeichen bezeichnet sind.

Die achtzehn Reifendrucksensoren S₁,...,S₁₈ übermitteln im Fahrbetrieb der Fahrzeuge F₁, F₂, F₃, also bei sich drehenden Rädern, etwa jede Minute jeweils einen Reifendruckmesswert D₁ bis D₁₈ sowie einen zugehörigen Reifendrucksensor-Identifizierungswert J₁,...,J₁₈ an das jeweils zugeordnete fahrzeugeigene Empfängermodul M₁, M₂, M₃. Im Ruhe- oder Parkbetrieb beziehungsweise im abgestellten Zustand oder im langfristigen Verkehrsstau wird von jedem der Reifendrucksensoren S₁,...,S₁₈ aus Gründen der Schonung der integrierten Batterien beispielsweise nur alle zwölf Stunden ein Reifendruckmesswert D₁,...,D₁₈ und ein zugehöriger Reifendrucksensor-Identifizierungswert J₁,...,J₁₈ übermittelt. Hiervon abweichende Zeitintervalle von einer Sekunde bis zu 48 Stunden sind gleichfalls möglich. Von den Reifendruckwerten D₁,...,D₁₈ sind in der Fig. 1 lediglich die Reifendruckmesswerte D₇ und D₈ der Reifendrucksensoren S₇ und S₈ an den beiden Vorderrädern R₇, R₈ des mittleren, zweiten Fahrzeugs F₂ bezeichnet.

Das fahrzeugeigene Empfängermodul M₂ des mittleren, zweiten Fahrzeugs F₂ ist vorrangig zum drahtlosen Empfang von mittels der Reifendrucksensoren S₇,...,S₁₂ gemessenen Reifendruckmesswerten der Räder R₇,...,R₁₂ dieses mittleren, zweiten Fahrzeugs F₂ ausgebildet. Dasselbe gilt für die Empfängermodule M₁, M₃ des ersten Fahrzeugs F₁ und des dritten Fahrzeugs F₃ sowie der an deren Rädern angeordneten Reifendrucksensoren S₁,...,S₆ beziehungsweise S₁₃,...,S₁₈, welche hier nicht bezeichnet sind.

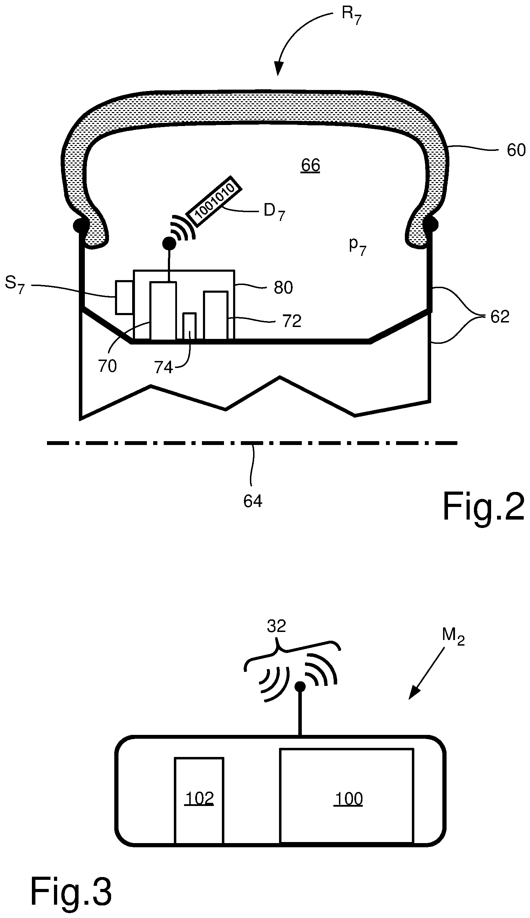

Jeder Reifendrucksensor S₁,...,S₁₈ kann ein funktionaler Teil einer kompakten Sensoreinheit 80 sein, welche neben dem Reifendrucksensor S₁,...,S₁₈ jeweils einen Temperatursensor 74, eine Batterie 72 und einen Sender 70 zur drahtlosen Übermittlung der gemessenen Reifendruckmesswerte sowie Temperaturmesswerte an das jeweilige Empfängermodul M₁, M₂, M₃ per Funk aufweist (siehe Fig. 2). Die Sensoreinheiten 80 sind beispielsweise unmittelbar mit der Felge oder mit dem Reifen des jeweiligen Rades R₁,...,R₁₈ verbunden. Die Energieversorgung der Empfängermodule M₁, M₂, M₃ erfolgt mittels einer fahrzeugeigenen elektrischen Batterie, welche über eine vergleichsweise hohe Kapazität verfügt. Bei Anhängefahrzeugen ist eine zugeordnete Batterie beispielsweise in dem jeweiligen Empfängermodul M₁, M₂, M₃ integriert.

Außerdem weist das Reifendruckmesssystem 10 eine fahrzeugexterne, stationär angeordnete Datenbank 20 auf, welche mittels eines leistungsfähigen, fahrzeugexternen Computers 22 betreibbar ist. Diese fahrzeugexterne Datenbank 20 enthält eine Vielzahl von gespeicherten fahrzeugspezifischen Werten. Das Empfängermodul M₁ des ersten Fahrzeugs F₁ ist mittels einer ersten bidirektionalen Funkverbindung 30, das Empfängermodul M₂ des zweiten Fahrzeug F₂ ist mittels einer zweiten bidirektionalen Funkverbindung 32, und das Empfängermodul M₃ des dritten Fahrzeugs F₃ ist mittels einer dritten bidirektionalen Funkverbindung 34 mit der fahrzeugexternen Datenbank 20 verbunden. Zu diesem Zweck weisen die Empfängermodule M₁, M₂, M₃ jeweils eine funktechnische Sende- und Empfangseinheit auf (siehe Fig. 3). Auch der fahrzeugexterne Computer 22 verfügt ebenfalls über eine zentrale funktechnische Sende- und Empfangseinheit 40. Die Empfängermodule M₁, M₂, M₃ sowie die bidirektionalen Funkverbindungen 30, 32, 34 sind auch im Parkzustand beziehungsweise im Stillstand der Fahrzeuge F₁, F₂, F₃, insbesondere bei inaktiver Zündung oder abgeschalteter oder nicht aktivierter Antriebseinheit zumindest teilweise betreibbar.

Die Datenbank 20 kann mit reservierten Speicherplatzbereichen in Form einer Tabelle 24 organisiert sein. Dabei enthält die Tabelle 24 für jedes der Räder R₁,...,R₁₈ der drei Fahrzeuge F₁, F₂, F₃ jeweils einen eindeutig zugeordneten, mittels der Reifendrucksensoren S₁,...,S₁₈ in zeitlich definierten Intervallen individuell ermittelten Reifendruckmesswert D₁,...,D₁₈ nebst der zugehörigen Identifizierungswerte J₁,...,J₁₈ des jeweiligen Reifendrucksensors S₁,...,S₁₈ der Räder R₁,...,R₁₈. Darüber hinaus sind die jeweiligen Fahrzeugidentifizierungswerte I₁, I₂, I₃ der Fahrzeuge F₁, F₂, F₃ in der Tabelle 24 abgespeichert. Der erste Reifendruckmesswert D₁ stammt dabei von dem ersten Reifendrucksensor S₁ mit dem ersten Identifizierungswert J₁, welcher am ersten Rad R₁ des ersten Fahrzeugs F₁ angeordnet ist. Der zweite Reifendruckmesswert D₂ stammt von dem zweiten Reifendrucksensor S₂ mit dem zweiten Identifizierungswert J₂, welcher am zweiten Rad R₂ des zweiten Fahrzeugs F₁ angeordnet ist, und so weiter.

Demnach sind die ersten sechs Räder R₁,...,R₆ dem ersten Fahrzeug F₁ mit dem Fahrzeugidentifizierungswert I₁, die zweiten sechs Räder R₇,...,R₁₂ dem zweiten Fahrzeug F₂ mit dem Fahrzeugidentifizierungswert I₂, und die dritten sechs Räder R₁₃,...,R₁₈ dem dritten Fahrzeug F₃ mit dem Fahrzeugidentifizierungswert I₃ zugeordnet. Bei den Fahrzeugidentifizierungswerten I₁, I₂, I₃ und den Identifizierungswerten J₁,...,J₁₈ der Sensoren S₁,...,S₁₈ an den Rädern R₁,...,R₁₈ kann es sich um eine beliebige digitale Abfolge von Zahlen, Buchstaben, Symbolen und/oder Piktogrammen geeigneter Länge handeln.

Somit erlaubt die Tabelle 24 zu praktisch jedem Zeitpunkt eine vollständige Übersicht über alle Reifendruckmesswerte D₁,...,D₁₈ und damit aller Reifendrücke p₁,...,p₁₈ in allen Rädern R₁,...,R₁₈ der drei Fahrzeuge F₁, F₂, F₃, auch wenn einzelne Reifendrucksensoren S₁,...,S₁₈ insbesondere durch eine ungünstige Stellung der jeweiligen Felge oder anderer Fahrwerksteile zumindest zeitweise oder teilweise funktechnisch abgeschirmt sind und somit nicht von dem ihnen zugeordneten, fahrzeugeigenen Empfängermodul M₁, M₂, M₃ empfangbar sind. Denn die hierdurch etwaig bestehenden Messlücken können durch von den benachbarten Empfängermodulen M₁, M₂, M₃ empfangenen Reifendruckmesswerten leicht in der Tabelle 24 ergänzt werden. Durch die Identifizierungswerte J₁,...,J₁₈ der Reifendrucksensoren S₁,...,S₁₈ ist deren eindeutige Zuordenbarkeit zu den einzelnen Rädern R₁,...,R₁₈ und den darin von den Reifendrucksensoren S₁,...,S₁₈ ermittelten Reifendruckmesswerten D₁,...,D₁₈ der Reifenluftdrücke p₁,...,p₁₈ gewährleistet.

Das Phänomen der unvollständigen Empfangbarkeit der Reifendruckmesswerte D₁,...,D₁₈ der Reifendrucksensoren S₁,...,S₁₈ durch die Empfängermodule M₁, M₂, M₃ und die Ergänzung fehlender Reifendruckmesswerte D₁,...,D₁₈ mittels der Tabelle 24 der Fig. 1 sei nachfolgend beispielhaft eingehender erläutert.

Das Sensorsignal des Reifendrucksensors S₇ des linken Vorderrades R₇ des zweiten Fahrzeugs F₂ ist in einer ersten kreissektorförmigen Zone 50 lediglich von dem Empfängermodul M₁ des ersten Fahrzeugs F₁ und nicht von dem eigentlich zugeordneten Empfängermodul M₂ des zweiten Fahrzeugs F₂ funktechnisch empfangbar. Anders sieht es bei dem Sensorsignal des an der gleichen Fahrzeugachse angeordneten Reifendrucksensors S₈ des rechten Vorderrades R₈ aus, welches in einer zweiten kreissektorförmigen Zone 52 von dem Empfängermodul M₂ des zweiten Fahrzeugs F₂ und auch von dem Empfängermodul M₃ des dritten Fahrzeugs F₃ funktechnisch empfangbar ist. Dies liegt daran, dass die beiden Zonen 50, 52 jeweils nur einen Bereich von jeweils ungefähr 270° überdecken. Ein Winkelbereich von jeweils etwa 90° ist in diesem Beispiel durch Fahrwerksteile funktechnisch abgeschattet beziehungsweise abgeschirmt.

Die Räder R₇,...,R₁₂ des zweiten Fahrzeugs F₂ beziehungsweise die Felgen und damit die Reifendrucksensoren S₇,...,S₁₂ befinden sich jeweils in einer unterschiedlichen umfangsseitigen Stellung, welches durch schwarze Kreisabschnitte mit einer jeweils unterschiedlichen Höhe an den Felgen (diese gezeichnet mit gestrichelter Linie) veranschaulicht ist. Im Ergebnis ist der Reifendruckmesswert D₇ des Reifendrucksensors S₇ am linken Vorderrad des zweiten Fahrzeugs F₂ in der Anordnung der Fahrzeuge F₁, F₂, F₃ und den umfangsseitigen Stellungen der Räder R₇,...,R₁₂ gemäß Fig. 1 nicht von dem Empfängermodul M₂ des zweiten Fahrzeugs F₂ empfangbar. Dieser Reifendruckmesswert D₇ des Reifendrucksensors S₇ des zweiten Fahrzeugs F₂ kann jedoch problemlos von dem Empfängermodul M₁ des ersten Fahrzeugs F₁ empfangen werden, obwohl dieser Reifendrucksensor S₇ gar nicht zum ersten Fahrzeug F₁ gehört.

Mittels der ersten bidirektionalen Funkverbindung 30 des Empfängermoduls M₁ des ersten Fahrzeugs F₁ von dem ersten Fahrzeug F₁ zum fahrzeugexternen Computer 22 lässt sich der so ermittelte fahrzeugfremde Reifendruckwert D₇ des Rades R₇ des zweiten Fahrzeugs F₂ zusammen mit dem zugehörigen Identifizierungswert J₇ dieses Reifendrucksensors S₇ und dem Fahrzeugidentifizierungswert I₂ des zweiten Fahrzeugs F₂ in die fahrzeugexterne Datenbank 20 hochladen sowie in der Tabelle 24 abspeichern. Anschließend kann dieser Reifendruckwert D₇ über die zweite bidirektionale Funkverbindung 32 des hierfür vorgesehenen Empfängermoduls M₂ des zweiten Fahrzeugs F₂ von der Datenbank 20 als Kopie in dieses zweite Empfängermodul M₂ heruntergeladen werden. Danach kann der Reifendruckwert D₇ im Empfängermodul M₂ des zweiten Fahrzeugs F₂ zur Vervollständigung der Reifendruckmesswerte des zweiten Fahrzeugs F₂ sowie zur weiteren Verwendung abgespeichert werden, wie zum Beispiel für lokale Anzeigezwecke mittels einer fahrzeugeigenen Anzeigeeinheit des zweiten Fahrzeugs F₂.

Der Reifendrucksensor S₈ des zweiten Vorderrades R₈ des zweiten Fahrzeugs F₂ ist aufgrund der hier gegebenen umfangsseitigen Stellung des rechten Vorderrades R₈ nicht von seiner Felge oder einem Fahrwerksbauteil abgeschattet, sodass der Reifendruckmesswert D₈ dieses Reifendrucksensors S₈ von dem dafür vorgesehenen fahrzeugeigenen zweiten Empfängermodul M₂ und zusätzlich auch von dem fahrzeugfremden Empfängermodul M₃ des benachbarten dritten Fahrzeugs F₃ problemlos empfangbar ist. Ein Empfang mittels des Empfängermoduls M₁ des ersten Fahrzeugs F₁ ist jedoch erkennbar nicht möglich.

Im Ergebnis sind daher bei wenigstens zwei nebeneinander oder hintereinander angeordneten Fahrzeugen F₁, F₂, F₃ die Reifendruckmesswerte D₁,...,D₁₈ sämtlicher Räder R₁,...,R₁₈ der mindestens zwei Fahrzeuge F₁, F₂, F₃ mittels der diesen zugeordneten Empfängermodulen M₁, M₂, M₃ durch das Zusammenwirken aller Komponenten lückenlos ermittelbar, sofern die räumliche Anordnung der Fahrzeuge F₁, F₂, F₃ und die umfangsseitige Stellung der Räder R₁,...,R₁₈ in Bezug zueinander sowie die funktechnische Empfangbarkeit der Reifendruckmesswerte D₁,...,D₁₈ dies gestattet, welches mit hoher Wahrscheinlichkeit der Fall sein wird.

Die bidirektionalen Funkverbindungen 30, 32, 34 zwischen den einzelnen Empfängermodulen M₁, M₂, M₃ und der Sende- und Empfangseinheit 40 des fahrzeugexternen Computers 22 können mittels eines geeigneten Funkübertragungsstandards, wie Mobilfunk, WLAN oder dergleichen realisiert sein. Der Einsatz eines Funkübertragungsstandards mit hoher Reichweite erlaubt einen deutschlandweiten, europaweiten oder gar globalen Einsatz des Reifendruckmesssystems sowohl für ruhende beziehungsweise parkende oder abgestellte als auch in Bewegung befindliche Fahrzeuge. Auch bei langfristig in einem Verkehrsstau stehenden Fahrzeugen F₁, F₂, F₃ lassen sich gegebenenfalls Reifendruckmesswerte D₁,...,D₁₈ in die fahrzeugexterne Datenbank 20 zur Vervollständigung übertragen.

Die in der fahrzeugexternen Datenbank 20 die jeweiligen Reifendruckwerte p₁,...,p₁₈ repräsentierenden Reifendruckmesswerte D₁,...,D₁₈ der einzelnen Räder R₁,...,R₁₈ der drei Fahrzeuge F₁, F₂, F₃ können darüber hinaus einer zentralen, fahrzeugexternen und stationären Anzeigeeinheit zuführbar sein, welche in den Figuren nicht dargestellt, aber an sich bekannt ist. Hierdurch ist eine zentrale Übersichtsanzeige sämtlicher Reifendruckmesswerte D₁,...,D₁₈ der Räder R₁,...,R₁₈ aller Fahrzeuge, beispielsweise in einem Speditionsbüro, einem Dispositionsraum, einer Werkstatt oder dergleichen realisierbar.

In den Empfängermodulen M₁, M₂, M₃ der Fahrzeuge F₁, F₂, F₃ sind mindestens die direkt ermittelbaren Reifendruckwerte D₁..., D₆, und D₇,...,D₁₂ sowie D₁₃,...,D₁₈ der jeweiligen Fahrzeuge abspeicherbar. Durch eine funktechnische Abschattung nicht direkt ermittelbare Reifendruckwerte sind unter Zuhilfenahme mindestens einer der bidirektionalen Funkverbindungen 30, 32, 34 aus der fahrzeugexternen Datenbank 20 zur Ergänzung fehlende Werte soweit vorhanden herunterladbar und in dem betreffenden Empfängermodul M₁, M₂, M₃ des jeweiligen Fahrzeugs F₁, F₂, F₃ abspeicherbar.

Mithilfe der Empfängermodule M₁, M₂, M₃ der Fahrzeuge F₁, F₂, F₃ sind darüber hinaus die Reifendruckmesswerte von in räumlicher Nähe zu diesen Empfängermodulen M₁, M₂, M₃ fahrzeugungebunden lagernden, in den Figuren jedoch nicht dargestellten Rädern mit entsprechenden funktechnisch kommunizierenden Reifendrucksensoren ermittelbar sowie in die fahrzeugexterne Datenbank 20 zur zentralen Auswertung hochladbar. Hierdurch lassen sich zum Beispiel Reifendruckmesswerte von in einer Halle gelagerten, fahrzeugungebundenen Rädern mit überwachen.

Außerdem ist mittels der in der fahrzeugexternen Datenbank 20 abgespeicherten Reifendruckmesswerte D₁,...,D₁₈ eine optimierte Parkordnung von Fahrzeugen F₁, F₂, F₃ bestimmbar und den Nutzern der Fahrzeuge F₁, F₂, F₃ als eine Empfehlung zur Anzeige zu bringen. Wenn das zweite Fahrzeug F₂ zum Beispiel häufiger im Einsatz ist, kann es, wie in Fig. 1 dargestellt, zwischen den beiden anderen Fahrzeugen F₁, F₃ geparkt sein, welche im Vergleich mit dem zweiten Fahrzeug F₂ seltener benutzt werden. Infolgedessen können die Messwerte der Reifendrucksensoren S₁,...,S₆ des ersten Fahrzeugs F₁ und die Reifendrucksensoren S₁₂,...,S₁₈ des dritten Fahrzeugs F₃ von dem Empfängermodul M₂ des häufiger in Betrieb befindlichen mittleren Fahrzeugs F₂ öfter und schneller ausgelesen sowie in die fahrzeugexterne Datenbank 20 hochgeladen werden. Hierdurch weisen die Reifendruckmesswerte D₁,...,D₆ und D₁₂,...,D₁₈ der beiden äußeren Fahrzeuge F₁, F₃ eine höhere Aktualität auf. Darüber hinaus lassen sich die zu überbrückenden Entfernungen der Funkverbindungen zwischen den Reifendrucksensoren S₁,..., S₆ und S₁₂,...,S₁₈ der beiden äußeren Fahrzeuge F₁, F₃ und dem Empfängermodul M₂ des mittleren Fahrzeugs F₂ verringern.

Die Fig. 2 zeigt einen vereinfachten Längsschnitt durch das linke vordere Rad R₇ des zweiten Fahrzeugs F₂ gemäß Fig. 1. Das Rad R₇ weist unter anderem einen schlauchlosen Reifen 60 auf, welcher auf einer Felge 62 aufgezogen ist, die drehbar an einer Achse 64 des Fahrwerks des hier nicht dargestellten zweiten Fahrzeugs F₂ angeordnet ist.

Der zu diesem Rad R₇ gehörende Reifendrucksensor S₇ ist zum Messen des Reifendrucks p₇ innerhalb eines näherungsweise torusförmigen Innenraumes 66 zwischen dem Reifen 60 und der Felge 62 ausgebildet. Der vom Reifendrucksensor S₇ gemessene Reifendruck p₇ wird vorzugsweise digitalisiert und als Reifendruckmesswert D₇ mittels eines Senders 70 drahtlos an das zugeordnete, fahrzeugeigene Empfängermodul M₂ des zweiten Fahrzeugs F₂ übermittelt. Darüber hinaus streut der Sender 70 seine Signale physikalisch bedingt in Empfängermodule der benachbarten Fahrzeuge F₁, F₃ ein, was erfindungsgemäß oftmals zur Vervollständigung fehlender Reifendruckmesswerte nutzbar ist. Zur Energieversorgung des Senders 70 und des Reifendrucksensors S₇ dient zum Beispiel eine besonders langlebige Batterie 72, beispielsweise eine Lithiumbatterie oder dergleichen. Der Reifendrucksensor S₇, der Temperatursensor 74, der Sender 70 samt Antenne sowie die Batterie 72 sind zur bevorzugten Befestigung innerhalb der Felge 62 funktional zu einer räumlich kompakten Sensoreinheit 80 zusammengefasst. Alternativ dazu können der Reifendrucksensor S₇, der Temperatursensor 74, der Sender 70 samt Antenne und die Batterie 72 auch in das Material des Reifens 60 einlaminiert sein.

Die Fig. 3 zeigt eine schematische Darstellung das Empfängermodul M₂ gemäß Fig. 1. Das Empfängermodul M₂ des hier nicht dargestellten zweiten Fahrzeugs F₂ verfügt über eine Sende- und Empfangseinheit 100, mittels der die bidirektionale Funkverbindung 32 zu dem kombinierten Funkempfänger und Funksender des fahrzeugexternen Computers 22 realisiert ist. Die Energieversorgung kann mittels des elektrischen Bordnetzes des zweiten Fahrzeugs F₂ und/oder autonom mittels einer optionalen, in das Empfängermodul M₂ integrierten Batterie 102 erfolgen. Von Bedeutung ist in diesem Zusammenhang, dass das Empfängermodul M₂ sowie dessen bidirektionale Funkverbindung 32 auch im Parkbetrieb oder im Ruhezustand des zweiten Fahrzeugs F₂, insbesondere bei inaktiver Zündung oder nicht laufender Antriebseinheit oder eines antriebslosen Fahrzeugs, zumindest zeitweise und hierbei bevorzugt in regelmäßigen Zeitintervallen mittels der fahrzeugeigenen Batterie oder einer im Empfängermodul integrierten Batterie aktivierbar ist.

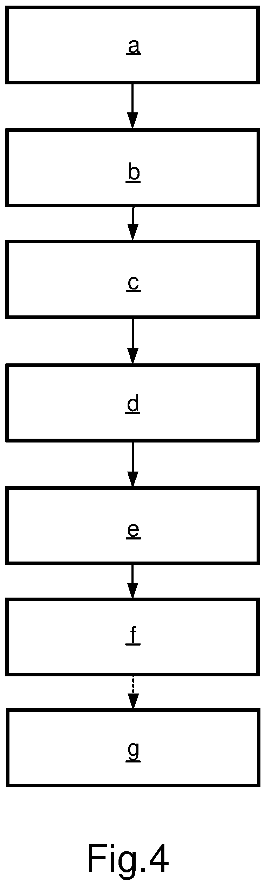

Die Fig. 4 zeigt einen Ablaufplan des die Merkmale der Erfindung aufweisenden Verfahrens zum Betrieb des Reifendruckmesssystems gemäß Fig. 1. Ausweislich dieses Ablaufplans gliedert sich ein Verfahren zum Betrieb des Reifendruckmesssystems 10 gemäß Fig. 1 in die nachfolgenden Verfahrensschritte:
Im ersten Verfahrensschritt a) erfolgt das Messen der Reifendrücke p_{1,.}..,p₁₈ sämtlicher Räder R₁,...,R₁₈ der Fahrzeuge F₁, F₂, F₃ mittels der diesen Rädern R₁,...,R₁₈ zugeordneten Reifendrucksensoren S₁,...,S₁₈.

Im zweiten Verfahrensschritt b) werden die ermittelten Reifendruckmesswerte D₁,...,D₁₈ zusammen mit einem Identifizierungswert J₁,...,J₁₈ des jeweils zugeordneten Reifendrucksensors S₁,...,S₁₈ drahtlos, also per Funk, versendet.

Im nachfolgenden dritten Verfahrensschritt c) werden die Reifendruckmesswerte D₁,...,D₁₈ und Identifizierungswerte J₁,...,J₁₈ des jeweils zugeordneten Reifendrucksensors S₁,...,S₁₈ mittels des jeweiligen Empfängermoduls M₁, M₂, M₃ drahtlos empfangen, und zwar sofern das betreffende Empfängermodul M₁, M₂, M₃ von den zugeordneten Reifendrucksensoren S₁,...,S₁₈ funktechnisch erreichbar ist beziehungsweise die Umgebungsbedingungen einen fehlerfreien Empfang ermöglichen.

Anschließend werden im vierten Verfahrensschritt d) sämtliche von dem jeweiligen Empfängermodul M₁, M₂, M₃ erfassten Reifendruckmesswerte D₁,... D₁₈ zusammen mit dem Identifizierungswert J₁,...,J₁₈ des jeweiligen Reifendrucksensors S₁,...,S₁₈ und einem das jeweilige Fahrzeug F₁, F₂, F₃ identifizierenden Fahrzeugidentifizierungswert I₁, I₂, I₃ an einen fahrzeugexternen Computer 22 übermittelt und von diesem in einer fahrzeugexterne Datenbank 20 abgespeichert. Das Übertragen der genannten Werte an den fahrzeugexternen Computer 22 erfolgt jeweils mittels zwischen den Empfängermodulen M₁, M₂, M₃ und diesem Computer 22 herstellbaren bidirektionalen Funkverbindungen 30, 32, 34.

Mit Hilfe der fahrzeugexternen Datenbank 20 erfolgt in einem fünften Verfahrensschritt e) das eindeutige Zuordnen der von den Empfängermodulen M₁, M₂, M₃ der Fahrzeuge F₁, F₂, F₃ ermittelten Reifendruckmesswerte D₁,...,D₁₈ zu den Rädern R₁,...,R₁₈ der Fahrzeuge F₁, F₂, F₃.

Mit einem sechsten Verfahrensschritt f) können die die Reifendrücke p₁,...,p₁₈ der Räder R₁,...,R₁₈ eines ausgewählten Fahrzeugs F₁, F₂, F₃ repräsentierenden Reifendruckmesswerte D₁,...,D₁₈ aus der fahrzeugexternen Datenbank 20 durch einen Nutzer und/oder ein beliebiges Empfängermodul M₁, M₂, M₃ als Kopie abgerufen werden und weiter genutzt werden.

Gemäß einem optionalen siebten Verfahrensschritt g) ist vorgesehen, dass nach dem Festsellen eines zu niedrigen Reifenluftdrucks automatisch einer benannten Person oder einem Betreiber einer Fahrzeugflotte beispielsweise per E-Mail oder mittels eines sozialen, elektronischen Kommunikationsmediums eine Nachricht zugesandt wird, aus der hervorgeht, dass ermittelt wurde, dass ein bestimmtes Rad an einem bestimmten Fahrzeug den gemessenen, zu niedrigen Reifenluftdruck aufweist.

Darüber hinaus können die Reifendruckmesswerte D₁,...,D₁₈ aus der Datenbank 20 auch selektiv in jedes Empfängermodul M₁, M₂, M₃ der Fahrzeuge F₁, F₂, F₃ heruntergeladen und beispielsweise mittels einer lokalen Ausgabeeinheit einem Nutzer beziehungsweise einem Fahrer zur Kenntnis gebracht werden. Demnach lassen sich auch die Reifendruckmesswerte von durch Fahrwerksteile abgeschirmten Reifendrucksensoren S₁,...,S₁₈ mit Hilfe der Empfängermodule M₁, M₂, M₃ benachbarter Fahrzeuge ermitteln, in die fahrzeugexterne Datenbank 20 hochladen und von dort in ein Empfängermodul M₁, M₂, M₃ des zu überwachenden Fahrzeugs herunterladen. Hierdurch wird die Überwachung der Reifendrücke p₁,...,p₁₈ der Räder R₁,...,R₁₈ aller in das Reifendruckmesssystem 10 eingebundenen Fahrzeuge erheblich verbessert.

Gemäß einer vorteilhaften Weiterbildung des Verfahrens werden die in der fahrzeugexternen Datenbank 20 abgespeicherten Reifendruckmesswerte D₁,...,D₁₈ an eine nicht dargestellte zentrale Anzeigeeinheit und/oder an einen weiteren zentralen, stationären Computer mittels der bidirektionalen Funkverbindungen 30, 32, 34 gesendet. Diese zentrale Anzeigeeinheit ermöglicht Nutzern einen ständig aktuellen Überblick über die Raddrücke der von ihnen betriebenen Fahrzeuge.

Das Verfahren zum Betrieb des Reifendruckmesssystems 10 gestattet außerdem eine Diebstahlüberwachung der dieses System nutzenden Fahrzeuge F₁, F₂, F₃. Kommt zum Beispiel das erste Fahrzeug F₁ abhanden und ist dessen Standort unbekannt, so können mittels eines sich in räumlicher Nähe befindenden Fremdfahrzeugs, welches gleichfalls das erfindungsgemäße Reifendruckmesssystem 10 nutzt, die betreffenden Reifendruckwerte D₁,...,D₆, die zugehörigen Identifizierungswerte J₁,...,J₆ der Reifendrucksensoren S₁,...,S₆ sowie der Fahrzeugidentifizierungswert I₁ zumindest teilweise empfangen werden und mittels des Empfängermoduls des Fremdfahrzeugs über dessen bidirektionale Funkverbindung in die fahrzeugexterne Datenbank hochgeladen werden.

Das aufgefundene Fahrzeug lässt sich dann zweifelsfrei als erste Fahrzeug F₁ identifizieren, wenn sich im Zuge eines Datenabgleichs herausstellt, dass zum Beispiel die hochgeladen Identifizierungswerte J₁,...,J₆ der Reifendrucksensoren S₁,...,S₆ und die Fahrzeugidentifizierungswerte I₁, I₂, I₃ des aufgefundenen Fahrzeugs mit denen des Fahrzeugs F₁ übereinstimmen, und dieses Fahrzeug F₁ in der fahrzeugexternen Datenbank 20 als abhandengekommen markiert ist. Das Markieren des Fahrzeugs F₁ kann zum Beispiel mittels eines Markers beziehungsweise eines so genannten Flags innerhalb einer entsprechend ergänzten Tabelle 24 erfolgen. Wenn dies der Fall ist, ist das aufgefundene Fahrzeug zweifelsfrei als das abhandengekommene Fahrzeug F₁ identifiziert. Dessen Standort kann anschließend anhand der in der Regel durch eine Fernüberwachung beziehungsweise eine Telematik stets bekannten GPS-Koordinaten des Fremdfahrzeugs beziehungsweise des auffindenden Fahrzeugs leicht bestimmt werden.

Die Diebstahlüberwachungsfunktion funktioniert selbst dann zuverlässig, wenn das abhandengekommene Fahrzeug F₁ stromlos ist, was etwa durch das Abklemmen oder das Sabotieren der fahrzeugeigenen Batterie im Zuge eines Diebstahls der Fall sein kann. Nur wenn alle Räder mit den darin verbauten Reifendrucksensoren gegen Räder ohne Sensorik ausgewechselt würden, wäre die vorstehend beschriebene, indirekt-passive Ortung ohne ein funktionierendes GPS-System im gestohlenen Fahrzeug nicht mehr möglich.

### Bezugszeichenliste (Teil der Beschreibung)

- 10: Reifendruckmesssystem
- 12: Untergrund
- 20: Fahrzeugexterne Datenbank
- 22: Fahrzeugexterner Computer
- 24: Tabelle in der Datenbank
- 30: Erste bidirektionale Funkverbindung
- 32: Zweite bidirektionale Funkverbindung
- 34: Dritte bidirektionale Funkverbindung
- 40: Sende- und Empfangseinheit am fahrzeugexternen Computer
- 50: Erste Zone eines Signalempfangs
- 52: Zweite Zone eines Signalempfangs
- 60: Reifen
- 62: Felge
- 64: Achse eines Fahrzeugs
- 66: Innenraum zwischen Felge und Reifen
- 70: Sender
- 72: Batterie
- 74: Temperatursensor
- 80: Sensoreinheit
- 100: Sende- und Empfangseinheit
- 102: Batterie
- D₁,...,D₁₈: Reifendruckmesswert der jeweiligen Reifendrucksensoren S₁,...S₁₈
- F₁: Erstes Fahrzeug; Radfahrzeug
- F₂: Zweites Fahrzeug; Radfahrzeug
- F₃: Drittes Fahrzeug; Radfahrzeug
- I₁: Fahrzeugidentifizierungswert eines ersten Fahrzeugs
- I₂: Fahrzeugidentifizierungswert eines zweiten Fahrzeugs
- I₃: Fahrzeugidentifizierungswert eines dritten Fahrzeugs
- J₁,...,J₁₈: Identifizierungswert der jeweiligen Reifendrucksensoren S₁,...S₁₈
- M₁: Empfängermodul am ersten Fahrzeug
- M₂: Empfängermodul am zweiten Fahrzeug
- M₃: Empfängermodul am dritten Fahrzeug
- R₁,...,R₆: Räder des ersten Fahrzeugs
- R₇,...,R₁₂: Räder des zweiten Fahrzeugs
- R₁₃,...,R₁₈: Räder des dritten Fahrzeugs
- p₁,...,p₁₈: Reifendrücke an den jeweiligen Rädern R₁ bis R₁₈
- S₁,...,S₁₈: Reifendrucksensoren an den jeweiligen Rädern R₁ bis R₁₈

## Patentansprüche

1. Reifendruckmesssystem (10) für Fahrzeuge (F₁, F₂, F₃), wie Personenfahrzeuge, Nutzfahrzeuge, Zugmaschinen, Sattelauflieger und/oder Anhängerfahrzeuge,
- wobei jedes Rad (R₁,.,R₁₈) eines Fahrzeugs (F₁, F₂, F₃) einen Reifendrucksensor (S₁,...,S₁₈), einen Sender (70) sowie eine Batterie (72) aufweist, und
- wobei das Fahrzeug (F₁, F₂, F₃) mit einem elektronischen, funktechnischen Empfängermodul (M₁, M₂, M₃) ausgestattet ist, welches zum drahtlosen Empfang von mittels der Reifendrucksensoren (S₁,...,S₁₈) gemessenen Reifendruckmesswerten (D₁,...,D₁₈) ausgebildet ist,
- wobei bei wenigstens zwei nebeneinander, hintereinander oder übereinander angeordneten Fahrzeugen (F₁, F₂, F₃) die Reifendruckmesswerte (D₁,...,D₁₈) sämtlicher Räder (R₁,..,R₁₈) der mindestens zwei Fahrzeuge (F₁, F₂, F₃) mittels der den Fahrzeugen (F₁, F₂, F₃) zugeordneten Empfängermodule (M₁, M₂, M₃) über Funk empfangbar sind, soweit die Anordnung der Fahrzeuge (F₁, F₂, F₃) sowie die Anordnung von Bauteilen der Fahrzeuge (F₁, F₂, F₃) und die Empfangbarkeit der Reifendruckmesswerte (D₁,...,D₁₈) dies ohne Funkabschattung ermöglicht,
- wobei das Empfängermodul (M₁, M₂, M₃) des jeweiligen Fahrzeugs (F₁, F₂, F₃) zumindest zeitweise mittels einer bidirektionalen Funkverbindung (30, 32, 34) mit einer fahrzeugexternen elektronischen Datenbank (20) verbindbar ist und
- wobei ein dem jeweiligen Fahrzeug (F₁, F₂, F₃) zugeordneter Fahrzeugidentifizierungswert (I₁, I₂, I₃) sowie die diesem Fahrzeug (F₁, F₂, F₃) zugeordneten Reifendruckmesswerte (D₁,...,D₁₈) der Räder (R₁,..,R₁₈) und Identifizierungswerte (J₁,...,J₁₈) der jeweiligen Reifendrucksensoren (S₁,..,S₁₈) der mindestens zwei Fahrzeuge (F₁, F₂, F₃) mittels der bidirektionalen Funkverbindung (30, 32, 34) in die fahrzeugexterne Datenbank (20) übertragbar sind,
**dadurch gekennzeichnet,**
- **dass** die Fahrzeugidentifizierungswerte (I₁, I₂, I₃), die Reifendruckmesswerte (D₁,...,D₁₈) und die Identifizierungswerte (J₁,...,J₁₈) der Reifendrucksensoren (S₁,..,S₁₈) aus der fahrzeugexternen Datenbank (20) zumindest von den Empfängermodulen (M₁, M₂, M₃) mittels der jeweiligen bidirektionalen Funkverbindungen (30, 32, 34) abfragbar und empfangbar sind.

2. Reifendruckmesssystem (10) nach Anspruch 1, **dadurch gekennzeichnet, dass** die Datenbank (20) mittels eines fahrzeugexternen Computers (22) derartig betreibbar ist, dass in dieser Datenbank (20) die Fahrzeugidentifizierungswerte (I₁, I₂, I₃) aller Fahrzeuge (F₁, F₂, F₃), welche dieses Reifendruckmesssystem (10) nutzen, sowie Identifizierungswerte (J₁,...,J₁₈) der Reifendrucksensoren (S₁,...,S₁₈) dieser Fahrzeuge (F₁, F₂, F₃) und die ermittelten sowie zugeordneten Reifendruckmesswerte (D₁,...,D₁₈) abspeicherbar sind.

3. Reifendruckmesssystem (10) nach Anspruch 2, **dadurch gekennzeichnet, dass** die bidirektionalen Funkverbindungen (30, 32, 34) zwischen den Empfängermodulen (M₁, M₂, M₃) und der Datenbank (20) mittels Sender und Empfänger mit den Merkmalen eines Funkübertragungsstandards realisiert ist.

4. Reifendruckmesssystem (10) nach Anspruch 2 oder 3, **dadurch gekennzeichnet, dass** das Reifendruckmesssystem (10) derartig ausgebildet ist, dass die Empfängermodule (M₁, M₂, M₃) sowie die bidirektionalen Funkverbindungen (30, 32, 34) auch bei nicht genutzten Fahrzeugen (F₁, F₂, F₃) und inaktiver Zündung zumindest zeitweise aktivierbar sind.

5. Reifendruckmesssystem (10) nach Anspruch 4, **dadurch gekennzeichnet, dass** die bidirektionalen Funkverbindungen (30, 32, 34) mittels einer jeweils in die Empfängermodule (M₁, M₂, M₃) integrierten Sende- und Empfangseinheit (100) realisiert sind.

6. Reifendruckmesssystem (10) nach Anspruch 5, **dadurch gekennzeichnet, dass** die in der fahrzeugexternen Datenbank (20) abgespeicherten Reifendruckmesswerte (D₁,...,D₁₈) der Fahrzeuge (F₁, F₂, F₃) zumindest einer fahrzeugexternen Anzeigeeinheit zuführbar sind.

7. Reifendruckmesssystem (10) nach Anspruch 5, **dadurch gekennzeichnet, dass** in dem Empfängermodul (M₁, M₂, M₃) eines Fahrzeugs (F₁, F₂, F₃) die direkt ermittelbaren Reifendruckmesswerte (D₁,...,D₁₈) abspeicherbar sind, und dass nicht direkt ermittelbare Reifendruckmesswerte (D₁,...,D₁₈) dieses Fahrzeugs (F₁, F₂, F₃) mittels der bidirektionalen Funkverbindung (30, 32, 34) von der fahrzeugexternen Datenbank (20) abfragbar, empfangbar und im Empfängermodul (M₁, M₂, M₃) des anfragenden Fahrzeugs (F₁, F₂, F₃) abspeicherbar sind.

8. Reifendruckmesssystem (10) nach einem der vorherigen Ansprüche, **dadurch gekennzeichnet, dass** mittels des Empfängermoduls (M₁, M₂, M₃) zumindest eines Fahrzeugs (F₁, F₂, F₃) die Reifendruckmesswerte (D₁,...,D₁₈) von in räumlicher Nähe des Empfängermoduls (M₁, M₂, M₃) fahrzeugungebunden lagernden Rädern mit Reifendrucksensoren ermittelbar sowie in die fahrzeugexterne Datenbank (20) zur zentralen Auswertung übermittelbar sind.

9. Reifendruckmesssystem (10) nach einem der vorherigen Ansprüche, **dadurch gekennzeichnet, dass** mittels der in der fahrzeugexternen Datenbank (20) abgespeicherten Reifendruckmesswerte (D₁,...,D₁₈) oder der Identifizierungswerte (J₁,..,J₁₈) der Reifendrucksensoren (S₁,...,S₁₈) sowie mit einem in einem Computer (22) abgespeicherten Optimierungsalgorithmus eine optimierte Parkordnung der mindestens zwei Fahrzeuge (F₁, F₂, F₃) bestimmbar und anzeigbar ist.

10. Verfahren zur Ermittlung der Reifendrücke (p₁,...,p₁₈) der Räder (R₁,..,R₁₈) von mindestens zwei in räumlicher Nähe zueinander angeordneten Fahrzeugen (F₁, F₂, F₃), wie Personenfahrzeugen, Nutzfahrzeugen, Zugmaschinen, Sattelaufliegern und/oder Anhängerfahrzeugen,
- wobei jedes Rad (R₁,..,R₁₈) eines Fahrzeugs (F₁, F₂, F ₃) einen Reifendrucksensor (S₁,...,S₁₈), einen Sender (70) sowie eine Batterie (72) aufweist, und
- wobei das Fahrzeug (F₁, F₂, F₃) mit einem elektronischen, funktechnischen Empfängermodul (M₁, M₂, M₃) ausgestattet ist, welches zum drahtlosen Empfang von mittels der Reifendrucksensoren (S₁,...,S₁₈) gemessenen Reifendruckmesswerten (D₁,...,D₁₈) ausgebildet ist,
umfassend die folgenden Schritte:
a) Messen der Reifendrücke (p₁,...,p₁₈) sämtlicher Räder (R₁,..,R₁₈) der mindestens zwei Fahrzeuge (F₁, F₂, F₃) mittels der diesen Rädern (R₁,..,R₁₈) zugeordneten Reifendrucksensoren (S₁,...,S₁₈),
b) drahtloses Versenden der Reifendruckmesswerte (D₁,...,D₁₈) zusammen mit einem Identifizierungswert (J₁,...,J₁₈) des jeweils zugeordneten Reifendrucksensors (S₁,...,S₁₈),
c) Empfangen dieser Reifendruckmesswerte (D₁,...,D₁₈) und Identifizierungswerte (J₁,...,J₁₈) mittels des jeweiligen Empfängermoduls (M₁, M₂, M₃), sofern dieses Empfängermodul (M₁, M₂, M₃) von den zugeordneten Reifendrucksensoren (S₁,...,S₁₈) ohne Funkabschattung erreichbar ist,
d) Senden sämtlicher von dem jeweiligen Empfängermodul (M₁, M₂, M₃) erfassten Reifendruckmesswerte (D₁,...,D₁₈) zusammen mit dem Identifizierungswert (J₁,...,J₁₈) des jeweiligen Reifendrucksensors (S₁,...,S₁₈) und einem das jeweilige Fahrzeug (F₁, F₂, F₃) identifizierenden Fahrzeugidentifizierungswert (I₁, I₂, I₃) an eine fahrzeugexterne Datenbank (20) mit Hilfe einer jeweils zwischen den Empfängermodulen (M₁, M₂, M₃) und dieser Datenbank (20) herstellbaren bidirektionalen Funkverbindung (30, 32, 34),
e) Zuordnen der von den Empfängermodulen (M₁, M₂, M₃) der mindestens zwei Fahrzeuge (F₁, F₂, F₃) ermittelten Reifendruckmesswerte (D₁,...,D₁₈) zu den Rädern (R₁,..,R₁₈) der mindestens zwei Fahrzeuge (F₁, F₂, F₃), und
f) Abrufen der die Reifendrücke (p₁,...,p₁₈) der Räder (R₁,..,R₁₈) eines ausgewählten Fahrzeugs (F₁, F₂, F₃) repräsentierenden Reifendruckmesswerte (D₁,...,D₁₈) aus der Datenbank (20) durch einen Nutzer,
**dadurch gekennzeichnet, dass** die in der fahrzeugexternen Datenbank (20) abgespeicherten Reifendruckmesswerte (D₁,...,D₁₈) automatisch und fahrzeugindividuell an die Empfängermodule (M₁, M₂, M₃) der jeweiligen Fahrzeuge (F₁, F₂, F₃) mit Hilfe der bidirektionalen Funkverbindungen (30, 32, 34) zurückübertragen werden.

11. Verfahren nach Anspruch 10, **dadurch gekennzeichnet, dass** nach dem Festsellen eines zu niedrigen Reifenluftdrucks automatisch einer benannten Person oder einem Betreiber einer Fahrzeugflotte, insbesondere per E-Mail oder mittels eines sozialen, elektronischen Kommunikationsmediums, eine Nachricht zugesandt wird, dass ein bestimmtes Rad an einem bestimmten Fahrzeug den gemessenen, zu niedrigen Reifenluftdruck aufweist.

12. Verfahren nach einem der Ansprüche 10 und 11, **dadurch gekennzeichnet, dass** die in der fahrzeugexternen Datenbank (20) abgespeicherten Reifendruckmesswerte (D₁,...,D₁₈) an eine zentrale, stationäre Anzeigeeinheit mit Hilfe einer bidirektionalen Funkverbindung übertragen werden.

## Claims

1. Tire pressure measuring system (10) for vehicles (F₁, F₂, F₃), such as passenger vehicles, commercial vehicles, tractors, semi-trailers and/or trailer vehicles,
- wherein each wheel (R₁,...,R₁₈) of a vehicle (F₁, F₂, F₃) has a tire pressure sensor (S₁,...,S₁₈), a transmitter (70) and a battery (72), and
- wherein the vehicle (F₁, F₂, F₃) is equipped with an electronic, radio receiver module (M₁, M₂, M₃) which is designed to wirelessly receive tire pressure measured values (D₁,...,D₁₈) measured by the tire pressure sensors (S₁,...,S₁₈),
- wherein in the case of at least two vehicles (F₁, F₂, F₃) arranged next to one another, one behind the other or one above the other, the tire pressure measured values (D₁,...,D₁₈) of all wheels (R₁,...,R₁₈) of the at least two vehicles (F₁, F₂, F₃) can be received via radio by means of the receiver modules (M₁, M₂, M₃) associated with the vehicles (F₁, F₂, F₃), provided that the arrangement of the vehicles (F₁, F₂, F₃) as well as the arrangement of components of the vehicles (F₁, F₂, F₃) and the receivability of the tire pressure measured values (D₁,...,D₁₈) make this possible without radio shadowing,
- wherein the receiver module (M₁, M₂, M₃) of the relevant vehicle (F₁, F₂, F₃) can be connected at least temporarily to a vehicle-external electronic database (20) by means of a bidirectional radio connection (30, 32, 34), and
- wherein a vehicle identification value (I₁, I₂, I₃) assigned to the relevant vehicle (F₁, F₂, F₃), as well as the tire pressure measured values (D₁,...,D₁₈) of the wheels (R₁,...,R₁₈) that correspond to this vehicle (F₁, F₂, F₃) and identification values (J₁,...,J₁₈) of the respective tire pressure sensors (S₁,...,S₁₈) of the at least two vehicles (F₁, F₂, F₃) can be transferred to the vehicle-external database (20) by means of the bidirectional radio connection (30, 32, 34),
**characterized in that**
- the vehicle identification values (I₁, I₂, I₃), the tire pressure measured values (D₁,...,D₁₈) and the identification values (J₁,...,J₁₈) of the tire pressure sensors (S₁,...,S₁₈) from the vehicle-external database (20) can be queried and received at least by the receiver modules (M₁, M₂, M₃) by means of the respective bidirectional radio connections (30, 32, 34).

2. Tire pressure measuring system (10) according to claim 1,
**characterized in that** the database (20) can be operated by means of a vehicle-external computer (22) such that the vehicle identification values (I₁, I₂, I₃) of all vehicles (F₁, F₂, F₃) which use this tire pressure measuring system (10), as well as identification values (J₁,...,J₁₈) of the tire pressure sensors (S₁,...,S₁₈) of these vehicles (F₁, F₂, F₃) and the determined and corresponding tire pressure measured values (D₁,...,D₁₈) can be saved in this database (20).

3. Tire pressure measuring system (10) according to claim 2,
**characterized in that** the bidirectional radio connections (30, 32, 34) between the receiver modules (M₁, M₂, M₃) and the database (20) are provided by means of transmitters and receivers having the features of a radio transmission standard.

4. Tire pressure measuring system (10) according to claim 2 or 3,
**characterized in that** the tire pressure measuring system (10) is designed such that the receiver modules (M₁, M₂, M₃) and the bidirectional radio connections (30, 32, 34) can be activated at least temporarily even when vehicles (F₁, F₂, F₃) are not in use and the ignition is inactive.

5. Tire pressure measuring system (10) according to claim 4,
**characterized in that** the bidirectional radio connections (30, 32, 34) are provided by means of a transmitting and receiving unit (100) integrated in each of the receiver modules (M₁, M₂, M₃).

6. Tire pressure measuring system (10) according to claim 5,
**characterized in that** the tire pressure measured values (D₁,...,D₁₈) of the vehicles (F₁, F₂, F₃) that are saved in the vehicle-external database (20) can be supplied to at least one vehicle-external display unit.

7. Tire pressure measuring system (10) according to claim 5,
**characterized in that** the tire pressure measured values (D₁,...,D₁₈) that can be determined directly can be saved in the receiver module (M₁, M₂, M₃) of a vehicle (F₁, F₂, F₃), and **in that** the tire pressure measured values (D₁,...,D₁₈) of this vehicle (F₁, F₂, F₃) that cannot be determined directly can be queried and received by the vehicle-external database (20) by means of the bidirectional radio connection (30, 32, 34), and can be saved in the receiver module (M₁, M₂, M₃) of the inquiring vehicle (F₁, F₂, F₃).

8. Tire pressure measuring system (10) according to any of the preceding claims, **characterized in that,** by means of the receiver module (M₁, M₂, M₃) of at least one vehicle (F₁, F₂, F₃), the tire pressure measured values (D₁,...,D₁₈) of wheels stored independently of the vehicle, in close proximity to the receiver module (M₁, M₂, M₃), can be determined using tire pressure sensors, and can be transferred to the vehicle-external database (20) for central evaluation.

9. Tire pressure measuring system (10) according to any of the preceding claims, **characterized in that,** by means of the tire pressure measured values (D₁,...,D₁₈) saved in the vehicle-external database (20) or the identification values (J₁,...,J₁₈) of the tire pressure sensors (S₁,...,S₁₈), as well as using an optimization algorithm saved on a computer (22), an optimized parking order of the at least two vehicles (F₁, F₂, F₃) can be identified and displayed.

10. Method for determining tire pressures (p₁,...,p₁₈) of the wheels (R₁,...,R₁₈) of at least two vehicles arranged in close proximity to one another (F₁, F₂, F₃), such as passenger vehicles, commercial vehicles, tractors, semi-trailers and/or trailer vehicles,
- wherein each wheel (R₁,...,R₁₈) of a vehicle (F₁, F₂, F₃) has a tire pressure sensor (S₁,...,S₁₈), a transmitter (70) and a battery (72), and
- wherein the vehicle (F₁, F₂, F₃) is equipped with an electronic, radio receiver module (M₁, M₂, M₃) which is designed to wirelessly receive tire pressure measured values (D₁,...,D₁₈) measured by the tire pressure sensors (S₁,...,S₁₈),
comprising the following steps:
a) measuring the tire pressures (p₁,...,p₁₈) of all wheels (R₁,...,R₁₈) of the at least two vehicles (F₁, F₂, F₃) by means of tire pressure sensors (S₁,...,S₁₈) associated with these wheels (R₁,...,R₁₈),
b) wirelessly sending the tire pressure measured values (D₁,...,D₁₈) together with an identification value (J₁,...,J₁₈) of the relevant associated tire pressure sensor (S₁,...,S₁₈),
c) receiving these tire pressure measured values (D₁,...,D₁₈) and identification values (J₁,...,J₁₈) by means of the relevant receiver module (M₁, M₂, M₃), provided that this receiver module (M₁, M₂, M₃) can be reached by the associated tire pressure sensors (S₁,...,S₁₈) without radio shadowing,
d) transmitting all tire pressure measured values (D₁,...,D₁₈) recorded by the relevant receiver module (M₁, M₂, M₃) together with the identification value (J₁,...,J₁₈) of the relevant tire pressure sensor (S₁,...,S₁₈) and a vehicle identification value (I₁, I₂, I₃) identifying the relevant vehicle (F₁, F₂, F₃) to a vehicle-external database (20) using a bidirectional radio connection (30, 32, 34) which can be established between each of the receiver modules (M₁, M₂, M₃) and this database (20),
e) assigning the tire pressure measured values (D₁,...,D₁₈) determined by the receiver modules (M₁, M₂, M₃) of the at least two vehicles (F₁, F₂, F₃) to the wheels (R₁,...,R₁₈) of the at least two vehicles (F₁, F₂, F₃), and
f) retrieval of the tire pressure measured values (D₁,...,D₁₈), representing the tire pressures (p₁,...,p₁₈) of the wheels (R₁,...,R₁₈) of a selected vehicle (F₁, F₂, F₃), from the database (20) by a user,
**characterized in that** the tire pressure measured values (D₁,...,D₁₈) saved in the vehicle-external database (20) are automatically and vehicle-specifically transferred back to the receiver modules (M₁, M₂, M₃) of the respective vehicles (F₁, F₂, F₃) using the bidirectional radio connections (30, 32, 34).

11. Method according to claim 10, **characterized in that,** following detection of a tire air pressure that is too low, a message is sent automatically, in particular by email or by means of a social, electronic communication medium, to a designated person or to a vehicle fleet operator that a specific wheel on a specific vehicle has the measured tire air pressure that is too low.

12. Method according to either claim 10 or claim 11, **characterized in that** the tire pressure measured values (D₁,...,D₁₈) saved in the vehicle-external database (20) are transferred to a central, stationary display unit using a bidirectional radio connection.

## Revendications

1. Système de mesure de pression de pneu (10) pour véhicules (F₁, F₂, F₃), tels que véhicules de tourisme, véhicules utilitaires, tracteurs, semi-remorques et/ou véhicules à remorque,
- dans lequel chaque roue (R₁,...,R₁₈) d'un véhicule (F₁, F₂, F₃) présente un capteur de pression de pneu (S₁,...,S₁₈), un émetteur (70) ainsi qu'une batterie (72), et dans lequel le véhicule (F₁, F₂, F₃) est équipé d'un module récepteur (M₁, M₂, M₃) électronique radiotechnique qui est conçu pour recevoir sans fil des valeurs de mesure de pression de pneu (D₁,...,D₁₈) mesurées à l'aide des capteurs de pression de pneu (S₁,...,S₁₈),
- dans lequel, pour au moins deux véhicules (F₁, F₂, F₃) agencés l'un à côté de l'autre, l'un derrière l'autre ou l'un au-dessus de l'autre, les valeurs de mesure de pression de pneu (D₁,...,D₁₈) de toutes les roues (R₁,...,R₁₈) des au moins deux véhicules (F₁, F₂, F₃) peuvent être reçues par radio à l'aide des modules récepteurs (M₁, M₂, M₃) associés aux véhicules (F₁, F₂, F₃), dans la mesure où l'agencement des véhicules (F₁, F₂, F₃) ainsi que l'agencement de composants des véhicules (F₁, F₂, F₃) et la possibilité de réception des valeurs de mesure de pression de pneu (D₁,...,D₁₈) le permettent sans occultation radio,
- dans lequel le module récepteur (M₁, M₂, M₃) du véhicule (F₁, F₂, F₃) respectif peut être relié au moins temporairement, à l'aide d'une liaison radio (30, 32, 34) bidirectionnelle, à une banque de données (20) électronique externe au véhicule, et
- dans lequel une valeur d'identification de véhicule (I₁, I₂, I₃) associée au véhicule (F₁, F₂, F₃) respectif ainsi que les valeurs de mesure de pression de pneu (D₁,...,D₁₈) des roues (R₁,...,R₁₈), lesquelles valeurs de mesure de pression de pneu sont associées à ce véhicule (F₁, F₂, F₃), et des valeurs d'identification (J₁,...,J₁₈) des capteurs de pression de pneu (S₁,...,S₁₈) respectifs des au moins deux véhicules (F₁, F₂, F₃) peuvent être transmises dans la banque de données (20) externe au véhicule à l'aide de la liaison radio (30, 32, 34) bidirectionnelle,
**caractérisé en ce**
- **que** les valeurs d'identification de véhicule (I₁, I₂, I₃), les valeurs de mesure de pression de pneu (D₁,...,D₁₈) et les valeurs d'identification (J₁,...,J₁₈) des capteurs de pression de pneu (S₁,...,S₁₈) peuvent être interrogées et reçues, à partir de la banque de données (20) externe au véhicule, au moins par les modules récepteurs (M₁, M₂, M₃) à l'aide des liaisons radio (30, 32, 34) bidirectionnelles respectives.

2. Système de mesure de pression de pneu (10) selon la revendication 1,
**caractérisé en ce que** la banque de données (20) peut être exploitée à l'aide d'un ordinateur (22) externe au véhicule, de telle sorte que, dans cette banque de données (20), les valeurs d'identification de véhicule (I₁, I₂, I₃) de tous les véhicules (F₁, F₂, F₃) qui utilisent ce système de mesure de pression de pneu (10) ainsi que les valeurs d'identification (J₁ ,J₁₈) des capteurs de pression de pneu (S₁,...,S₁₈) de ces véhicules (F₁, F₂, F₃) et les valeurs de mesure de pression de pneu (D₁,...,D₁₈) déterminées et associées peuvent être mémorisées.

3. Système de mesure de pression de pneu (10) selon la revendication 2,
**caractérisé en ce que** les liaisons radio (30, 32, 34) bidirectionnelles entre les modules récepteurs (M₁, M₂, M₃) et la banque de données (20) sont réalisées à l'aide d'émetteurs et de récepteurs comportant les caractéristiques d'un standard de transmission radio.

4. Système de mesure de pression de pneu (10) selon la revendication 2 ou 3, **caractérisé en ce que** le système de mesure de pression de pneu (10) est conçu de telle sorte que les modules récepteurs (M₁, M₂, M₃) ainsi que les liaisons radio (30, 32, 34) bidirectionnelles peuvent être activés au moins temporairement même lorsque les véhicules (F₁, F₂, F₃) ne sont pas utilisés et que le contact d'allumage est coupé.

5. Système de mesure de pression de pneu (10) selon la revendication 4,
**caractérisé en ce que** les liaisons radio (30, 32, 34) bidirectionnelles sont réalisées à l'aide d'une unité d'émission et de réception (100) intégrée respectivement dans les modules récepteurs (M₁, M₂, M₃).

6. Système de mesure de pression de pneu (10) selon la revendication 5,
**caractérisé en ce que** les valeurs de mesure de pression de pneu (D₁,...,D₁₈) des véhicules (F₁, F₂, F₃), lesquelles valeurs de mesure de pression de pneu sont mémorisées dans la banque de données (20) externe au véhicule, peuvent être acheminées à au moins une unité d'affichage externe au véhicule.

7. Système de mesure de pression de pneu (10) selon la revendication 5,
**caractérisé en ce que** les valeurs de mesure de pression de pneu (D₁,...,D₁₈) pouvant être déterminées directement peuvent être mémorisées dans le module récepteur (M₁, M₂, M₃) d'un véhicule (F₁, F₂, F₃), **et en ce que** des valeurs de mesure de pression de pneu (D₁,...,D₁₈) de ce véhicule (F₁, F₂, F₃), lesquelles valeurs de mesure de pression de pneu ne peuvent pas être déterminées directement, peuvent être interrogées par la banque de données (20) externe au véhicule à l'aide de la liaison radio (30, 32, 34) bidirectionnelle, reçues et mémorisées dans le module récepteur (M₁, M₂, M₃) du véhicule (F₁, F₂, F₃) demandeur.

8. Système de mesure de pression de pneu (10) selon l'une des revendications précédentes, **caractérisé en ce qu'**à l'aide du module récepteur (M₁, M₂, M₃) d'au moins un véhicule (F₁, F₂, F₃), les valeurs de mesure de pression de pneu (D₁,...,D₁₈) de roues comportant des capteurs de pression de pneu et entreposées à proximité spatiale du module récepteur (M₁, M₂, M₃) sans être montées sur le véhicule peuvent être déterminées et transmises à la banque de données (20) externe au véhicule pour une évaluation centrale.

9. Système de mesure de pression de pneu (10) selon l'une des revendications précédentes, **caractérisé en ce qu'**une commande de stationnement optimisée des au moins deux véhicules (F₁, F₂, F₃) peut être définie et affichée à l'aide des valeurs de mesure de pression de pneu (D₁,...,D₁₈) mémorisées dans la banque de données (20) externe au véhicule ou des valeurs d'identification (J₁,...,J₁₈) des capteurs de pression de pneu (S₁,...,S₁₈) ainsi qu'au moyen d'un algorithme d'optimisation mémorisé dans un ordinateur (22).

10. Procédé permettant de déterminer les pressions de pneu (p₁,...,p₁₈) des roues (R₁,...,R₁₈) d'au moins deux véhicules (F₁, F₂, F₃) disposés à proximité l'un de l'autre dans l'espace, tels que des véhicules de tourisme, des véhicules utilitaires, des tracteurs, des semi-remorques et/ou des véhicules à remorque,
- dans lequel chaque roue (R₁,...,R₁₈) d'un véhicule (F₁, F₂, F₃) présente un capteur de pression de pneu (S₁,...,S₁₈), un émetteur (70) ainsi qu'une batterie (72), et
- dans lequel le véhicule (F₁, F₂, F₃) est équipé d'un module récepteur (M₁, M₂, M₃) électronique radiotechnique qui est conçu pour la réception sans fil de valeurs de mesure de pression de pneu (D₁,...,D₁₈) mesurées à l'aide des capteurs de pression de pneu (S₁,...,S₁₈),
comprenant les étapes suivantes :
a) mesure des pressions de pneu (p₁,...,p₁₈) de toutes les roues (R₁,...,R₁₈) des au moins deux véhicules (F₁, F₂, F₃) à l'aide des capteurs de pression de pneu (S₁,...,S₁₈) associés à ces roues (R₁,...,R₁₈),
b) envoi sans fil des valeurs de mesure de pression de pneu (D₁,...,D₁₈) conjointement avec une valeur d'identification (J₁,...,J₁₈) du capteur de pression de pneu (S₁,... ,S₁₈) respectivement associé,
c) réception de ces valeurs de mesure de pression de pneu (D₁,...,D₁₈) et valeurs d'identification (J₁,... ,J₁₈) à l'aide du module récepteur (M₁, M₂, M₃) respectif, pour autant que ce module récepteur (M₁, M₂, M₃) peut être atteint par les capteurs de pression de pneu (S₁,...,S₁₈) associés sans occultation radio,
d) envoi de toutes les valeurs de mesure de pression de pneu (D₁,...,D₁₈) enregistrées par le module récepteur (M₁, M₂, M₃) respectif, conjointement avec la valeur d'identification (J₁,...,J₁₈) du capteur de pression de pneu (S₁,...,S₁₈) respectif, et d'une valeur d'identification de véhicule (I₁, I₂, I₃) identifiant le véhicule (F₁, F₂, F₃) respectif, à une banque de données (20) externe au véhicule par le biais d'une liaison radio (30, 32, 34) bidirectionnelle pouvant être établie respectivement entre les modules récepteurs (M₁, M₂, M₃) et cette banque de données (20),
e) association des valeurs de mesure de pression de pneu (D₁,...,D₁₈) déterminées par les modules récepteurs (M₁, M₂, M₃) des au moins deux véhicules (F₁, F₂, F₃) aux roues (R₁,...,R₁₈) des au moins deux véhicules (F₁, F₂, Fs), et
f) récupération par un utilisateur à partir de la banque de données (20), des valeurs de mesure de pression de pneu (D₁,...,D₁₈) représentant les pressions de pneu (p₁,...,p₁₈) des roues (R₁,...,R₁₈) d'un véhicule (F₁, F₂, F₃) sélectionné,
**caractérisé en ce que** les valeurs de mesure de pression de pneu (D₁,...,D₁₈) mémorisées dans la banque de données (20) externe au véhicule sont retransmises, par le biais des liaisons radio (30, 32, 34) bidirectionnelles, automatiquement et individuellement pour chaque véhicule aux modules récepteurs (M₁, M₂, M₃) des véhicules (F₁, F₂, F₃) respectifs.

11. Procédé selon la revendication 10, **caractérisé en ce qu'**après la détection d'une pression de pneu trop basse, un message est automatiquement envoyé à une personne désignée ou à un exploitant d'une flotte de véhicules, en particulier par courrier électronique ou à l'aide d'un média social de communication électronique, pour indiquer qu'une roue donnée sur un véhicule donné présente la pression de pneu trop basse mesurée.

12. Procédé selon l'une des revendications 10 et 11, **caractérisé en ce que** les valeurs de mesure de pression de pneu (D₁,... _{,}D₁₈) mémorisées dans la banque de données (20) externe au véhicule sont transmises à une unité d'affichage centrale fixe par le biais d'une liaison radio bidirectionnelle.
